# EUROPEAN PATENT SPECIFICATION

(11) **EP 2 660 362 B1**
(45) Date of publication and mention of the grant of the patent: **26.06.2019**
(21) Application number: 11853577.2
(22) Date of filing: 27.12.2011
(51) Int. Cl.: C25D 5/14, F16J 9/26, C25D 5/48, C25D 7/10, C25F 3/16, C25D 15/00, C25D 5/52, C25D 3/04, C25D 5/36, C25D 5/50

(54) **COMPOSITE CHROMIUM PLATING FILM, AND SLIDING MEMBER EQUIPPED WITH THE FILM**
VERBUNDVERCHROMUNGSFILM UND GLEITELEMENT MIT DIESEM FILM
FILM COMPOSITE DE PLACAGE AU CHROME ET ÉLÉMENT DE GLISSEMENT MUNI DU FILM

(30) Priority: 27.12.2010 JP 2010289109
(43) Date of publication of application: 06.11.2013
(73) Proprietor: Nippon Piston Ring Co., Ltd., Saitama-shi Saitama 338-8503 (JP)
(72) Inventor: OKAZAKI, Takahiro, Saitama City Saitama 338-8503 (JP); TAMEGAI, Etsuo, Saitama City Saitama 338-8503 (JP); KAMIYAMA, Hideaki, Saitama City Saitama 338-8503 (JP); OGAWA, Katsuaki, Saitama City Saitama 338-8503 (JP)
(74) Representative: Grünecker Patent- und Rechtsanwälte PartG mbB
(86) International application number: PCT/JP2011/080288
(87) International publication number: WO 2012/091047

(56) References cited:
- EP-A1- 0 841 413
- FR-A1- 2 963 785
- JP-A- 10 130 891
- JP-A- 10 130 892
- US-A- 6 054 225

## Description

### [Technical Field]

The present invention relates to a composite chromium plating film and a sliding member using the film. More specifically, the present invention relates to a hard chromium plating film in which crack-like grooves are filled with hard particles and a sliding member and a piston ring used for an internal-combustion engine using the film.

### [Background Art]

For recent internal-combustion engines, high power performance and good fuel efficiency have been always required. In particular, marine internal-combustion engines need to have long term and stable sliding properties. To this end it is necessary to improve the scuffing resistance performance between a piston ring attached to a piston, a member that generates driving force for an internal-combustion engine, and a cylinder liner, and the wear resistance performance of the sliding surface of a piston ring sliding on the inner circumferential wall of the cylinder liner.

To meet the requirement, it has been attempted to form a hard chromium layer with crack-like grooves on the sliding surface of a piston ring and fill the crack-like grooves with solid particles to obtain solid lubricating effect, thereby improving the wear resistance performance and the scuffing resistance performance of the sliding surface of the piston ring sliding on the inner circumferential wall of a cylinder liner.

For example, to solve the same problem as above, Patent Literature 1 discloses a technique for using a hard chromium layer in which solid particles are present in a crack of a chromium layer. Claim 1 of Patent Literature 1 describes "an electrolytically deposited hard chromium layer having a network of cracks, comprising at least one lower layer having a network of widened cracks and a surface layer having a network of widened cracks, wherein solid particles are embedded within the widened cracks". It is understood from the Specification and the Drawings of Patent Literature 1 that the solid particles are spherical particles of a hard material of aluminum oxide, boron carbide, boron nitride, chromium carbide, silicon dioxide, titanium carbide, diamond and/or tungsten carbide.

Also Patent Literature 2 discloses an invention with an object to provide a composite Cr plating film containing hard particles in a network of crack-like grooves formed in a hard Cr plating film, which has excellent wear resistance and scuffing resistance and is less damaging to a sliding mating material. To achieve the object, Patent Literature 2 employs "a composite Cr plating film containing hard particles in a network of crack-like grooves formed in a hard Cr plating film, wherein the hard particles are spherical, have an average particle size of 0.7 to 10 µm and a composite ratio of 3 to 15% in a volume ratio.

Further, Patent Literature 3 discloses an invention with an object to provide a composite chromium plating film containing hard particles in network-shaped microcracks, and having excellent wear resistance and scuffing resistance and less damaging to a sliding mating material. To achieve the object, Patent Literature 3 describes employing "a composite chromium plating film containing hard particles in network-shaped microcracks, said microcracks having a surface-occupying ratio of 10 to 20% by area and a distribution density of 1,200 to 2,500 pieces/cm, and the amount of said hard particles being 1 to 15% by mass per 100% by mass of the entire plating film." Paragraph [0023] of the Specification of Patent Literature 3 states that the hard particles are preferably made of at least one selected from the group consisting of Al₂O₃, SiC, Si₃N₄ and diamond, more preferably made of SiC and/or Si₃N₄, particularly preferably made of Si₃N₄.

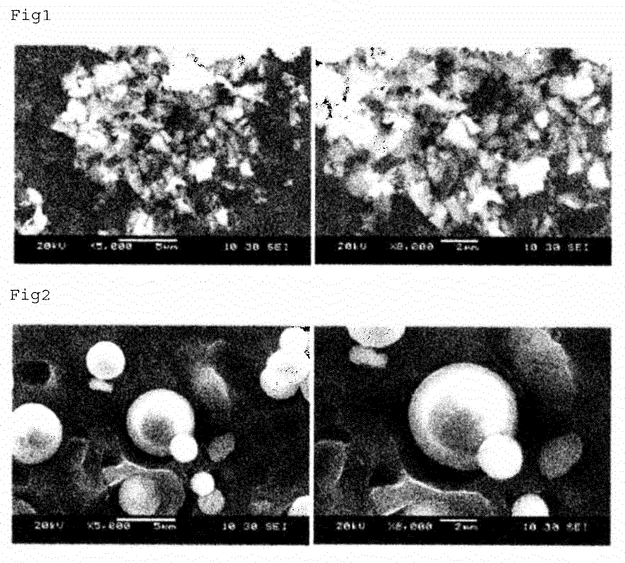

In light of the common technical knowledge at that time, it is understood that the hard particles used in the inventions disclosed in Patent Literature 1 to Patent Literature 3 are spherical as described in claim 2 and paragraph [0016] of Patent Literature 2. Also, particles filled in a crack-like groove in hard chromium plating formed on piston ring products on the market today are also spherical as shown in Figure 2.

US 6,054,225 discloses a composite chromium plating film containing hard particles in a network of cracks formed in a hard chromium plating film, wherein said hard particles are spherical particles with an average particle size of 0.7 to 10 µm and a distribution ratio of 3 to 15 percent by volume.

EP 0841413 A1 discloses a composite chromium plating film containing hard particles in a network of cracks formed in a hard chromium plating film, wherein said hard particles are Si₃N₄ particles with an average particle size of 0.8 to 3 µm and a distribution ratio of 3 to 15 percent by volume.

### [Citation List]

### [Patent Literature]

[Patent Literature 1] Japanese Patent No. 2602499
[Patent Literature 2] Japanese Patent Laid-Open No. 10-130892
[Patent Literature 3] International Publication No. WO2005/073437

### [Summary of Invention]

### [Technical Problem]

However, using a spherical particle as a particle filled in a crack-like groove in hard chromium plating formed on a piston ring product has caused the following problems.

Problem 1: When spherical hard particles were to be filled in crack-like grooves in hard chromium plating, and the relation between the width of the crack-like grooves and the particle size of the spherical particles was inappropriate, good filling state of crack-like grooves with spherical particles could not be obtained and the quality of the products showed large variations.

Problem 2: Since particles that have entered crack-like grooves in hard chromium plating are spherical, when the entering of the particles into the crack-like grooves was insufficient, the particles easily came off the crack-like grooves at the time of sliding. As a result, internal-combustion engines did not have long term use stability as designed and scuffing or wear progressed to deteriorate sliding performance without fulfilling the useful life.

For the above reasons, there has been a demand for a film for a sliding surface, in which hard particles are uniformly filled in crack-like grooves in hard chromium plating formed on the sliding surface. And there has been a demand for a piston ring product using such a film and having excellent stability for long term use.

### [Solution to Problem]

The present inventors have conducted intensive studies and as a result, to solve the above problems, have adopted a composite chromium plating film, a piston ring for an internal-combustion engine and the like described below.

Composite chromium plating film: The composite chromium plating film of the present invention comprises a hard chromium plating film having crack-like grooves filled with hard particles, wherein the hard particles are selected from alumina particles, silicon carbide particles, silicon nitride particles and diamond particles with an irregular particle shape and an average equivalent circle diameter of 6.0 µm or less, or a mixture thereof, characterized in that the hard particles have powder characteristics of an average circularity of 0.70 to 0.85, and an aspect ratio of 1.3 or more wherein the powder characteristics are determined as explained below.

Preferably the composite chromium plating film of the present invention has an average particle size D₅₀ in laser diffraction/scattering particle diameter distribution measurement of 0.8 µm to 2.0 µm.

In the composite chromium plating film of the present invention, preferably the crack-like grooves have a groove width of 0.5 µm to 10 µm.

In the composite chromium plating film of the present invention, preferably the crack-like grooves have a surface distribution density of 250 pieces/cm to 1000 pieces/cm.

In the composite chromium plating film of the present invention, preferably the crack-like grooves have an area occupancy rate on a surface of 3% by area to 30% by area.

In the composite chromium plating film of the present invention, preferably the composite chromium plating film comprises two or more stacked hard chromium plating layers.

Sliding member: In the present invention, any one of the composite chromium plating films described above is provided on the sliding surface of a member.

It is preferable that of such members, the composite chromium plating film is used for the sliding surface of a piston ring for an internal-combustion engine.

### [Advantageous Effect of Invention]

Since irregular hard particles are used in the composite chromium plating film of the present invention, the filling state of crack-like grooves in hard chromium plating with hard particles can be remarkably improved compared to the case of using spherical hard particles. As a result, the composite chromium plating film provided on the sliding surface of a piston ring or the like for an internal-combustion engine can prevent hard particles from easily coming off the crack-like grooves at the time of sliding and thus can effectively prevent scuffing and wear in a cylinder. Consequently an internal-combustion engine without deterioration of sliding performance even for long term use can be provided.

### [Brief Description of Drawings]

Figure 1 is scanning electron micrographs of irregular hard particles used in the present invention.
Figure 2 is scanning electron micrographs of conventionally used spherical hard particles.
Figure 3 is optical micrographs of crack-like grooves in a hard chromium plating layer found when observed from the surface of the hard chromium plating layer.
Figure 4 is a view for understanding the relation between a "wear index" and a "surface distribution density of crack-like grooves."
Figure 5 is an optical micrograph of a cross-section of stacked hard chromium plating layers constituting a composite chromium plating layer.
Figure 6 is scanning electron micrographs showing the state of irregular alumina particles present in crack-like grooves of a composite chromium plating layer according to the present invention.
Figure 7 is a schematic view illustrating an outline of a wear tester used for measuring a wear index.
Figure 8 is scanning electron micrographs showing the state of spherical alumina particles present in crack-like grooves of a conventional composite chromium plating layer.
Figure 9 is a view of comparison for understanding the difference in wear indices of Examples and Comparative Examples.

### [Description of Embodiments]

Hereinafter embodiments of the composite chromium plating film of the present invention, embodiments of the sliding member of the present invention and the like will be described.

### <Embodiments of composite chromium plating film>

In the composite chromium plating film of the present invention, a hard chromium plating film has crack-like grooves filled with irregular hard particles. Herein the irregular hard particles have powder characteristics of an average circularity of 0.70 to 0.85, an average equivalent circle diameter of 6.0 µm or less and an aspect ratio of 1.3 or more.

Average circularity of hard particle: It is preferable that the irregular hard particles used in the present invention have an average circularity of from 0.70 to 0.85. Herein the average circularity means an average of numerical values obtained by dividing a circumference of an imaginary circle having the same area as the projected area of an irregular hard particle by the circumference of the particle. The closer the value to 1, the more true-circular hard particles are present. When the definition of the average circularity is applied to spherical powder, the average circularity represents the degree of irregularity of the surface of the particle. However, the irregular hard particles used in the present invention are obviously not spherical as seen from Figure 1, and therefore it may be considered that the average circularity indicates flatness of the whole particles. Further, as shown in Figure 2, since particles of spherical powder used in Comparative Example described later have a smooth surface with few irregularities, it is considered that the average circularity value directly represents the shape of particles.

When the average circularity is less than 0.70, particles are even flatter and so filling properties for crack-like grooves in a hard chromium plating layer seem to be improved, but the fact is that undesirably the particles become less flowable and filling properties for the crack-like grooves are likely to be deteriorated. On the other hand, an average circularity of more than 0.85 is not preferred because filling properties for crack-like grooves in a hard chromium plating layer are as poor as those in the case of using spherical powder.

Average equivalent circle diameter of hard particle: It is preferable that the irregular hard particles used in the present invention have an average equivalent circle diameter of 6.0 µm or less. Herein the average equivalent circle diameter means the diameter of an imaginary circle having the same area as the projected area of a hard particle measured, namely, the diameter of a circumscribed circle of an irregular hard particle. When the average equivalent circle diameter is more than 6.0 µm, the particles are large, and in connection with the width of crack-like grooves in a hard chromium plating layer described later, filling properties for crack-like grooves with irregular particles are deteriorated. Therefore, in consideration of the filling properties for crack-like grooves with irregular particles, the irregular hard particles used in the present invention have an average equivalent circle diameter of more preferably 5.0 µm or less. The lower limit of the average equivalent circle diameter is not particularly limited. This is because as seen from Figure 1, irregular hard particles include fine particles having a maximum diameter of the order of a nanometer, and these particles are coagulated to make it difficult to determine the exact lower limit of the particle size from the viewpoint of filling performance for crack-like grooves.

Aspect ratio of hard particle: It is preferable that the irregular hard particles used in the present invention have an aspect ratio of 1.3 or more. The aspect ratio is a ratio between, in a two-dimensional projection of irregular hard particles, the maximum length between two random points on the circumference of a particle and the maximum vertical length that is the minimum length between two lines parallel to the maximum length that sandwich a particle. The closer the value to 1, the closer to a true circle the particle is. The larger the value, the higher the flatness of the particle and the more needle like the particle is.

The "average circularity", "average equivalent circle diameter", and "aspect ratio" described above were determined as follows. Particle shape image analyzer PITA-1 made by SEISHIN ENTERPRISE Co., Ltd. was used for the measurement. The measurement method includes taking a still image of hard particles flowing in a dispersion medium and analyzing the image. 0.1 g of hard particles are dispersed in the condition of dispersion medium: silicone oil, carrier fluid 1 flow rate: 10 µl/sec, carrier fluid 2 flow rate: 10 µl/sec and sample fluid flow rate: 0.08 µl/sec, and allowed to pass through a cell. While binarization is carried out with the first binarization threshold for determining particles to be taken being 80 and the first binarization threshold for determining the outline of particles that have been taken being 200, projections of 3000 dispersed hard particles are taken by a monochrome CCD camera provided with a 10 power objective lens. Based on the 3000 projections taken, the values were calculated as follows.

- Circularity = (circumference of a circle having the same area as that of a particle in a projection)/(circumference of a particle in a projection)
- Average circularity: an average of circularity of 3000 particles
- Equivalent circle diameter: diameter of a circle having the same area as that of a particle in a projection
- Average equivalent circle diameter: an average of equivalent circle diameter of 3000 particles
- Aspect ratio = (maximum length)/(maximum vertical length)

Average particle size of hard particles: It is preferable that the hard particles according to the present invention have an average particle size D₅₀ in laser diffraction/scattering particle size distribution measurement of 0.8 µm to 2.0 µm. Figure 1 clearly shows that the hard particles as described herein have an irregular shape and are in a state of coagulation. Therefore it is obvious that the particle size of the coagulated particles is also included in the laser diffraction/scattering particle size distribution measurement. Regardless of the presence of such coagulated particles, an average particle size D₅₀ measured in the laser diffraction/scattering particle size distribution measurement of less than 0.8 µm is not preferred, because in the production method described later, the weight of the particles becomes low and therefore the particles have poor engaging properties in crack-like grooves in a hard chromium plating layer and fixing properties of particles in the crack-like grooves is likely to be deteriorated. On the other hand, an average particle size D₅₀ measured in the laser diffraction/scattering particle size distribution measurement of more than 2.0 µm is not preferred because more particles coagulate and large coagulated particles that can be regarded as a coarse particle increase and therefore filling properties for crack-like grooves in a hard chromium plating layer are likely to be deteriorated.

Type of hard particle: It is preferable that as the irregular hard particle according to the present invention, one of alumina particles, silicon carbide particles, silicon nitride particles and diamond particles with an irregular particle shape, or a mixture thereof is used. Using such irregular hard particles enables stable filling of hard particles in crack-like grooves in a hard chromium plating layer. The hard particles function to retain lubricating oil. Moreover, compared to the case of using spherical hard particles, using irregular hard particles is less likely to cause drop of hard particles even when the hard chromium plating layer is worn, and therefore in an internal-combustion engine, good wear resistance, scuffing resistance and less damaging to a mating material can be maintained for a long period.

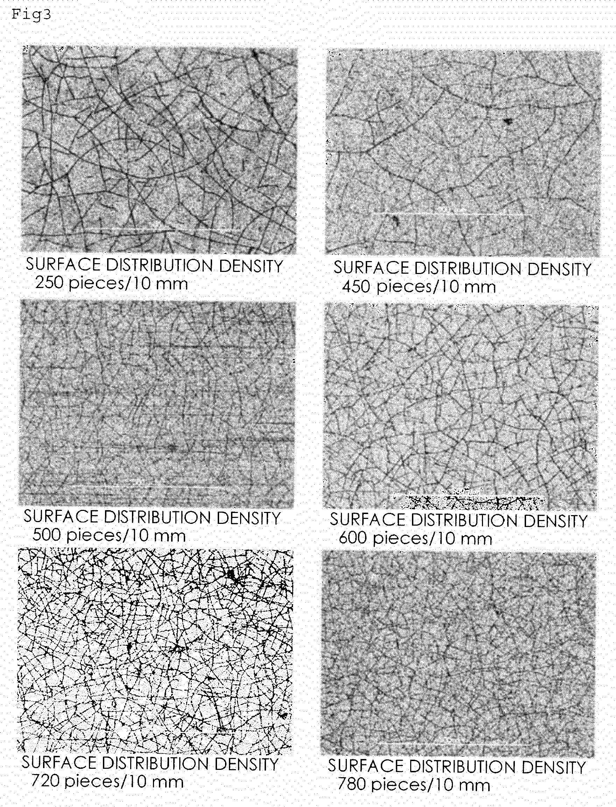

Aspect of hard chromium plating film: As shown in Figure 3, crack-like grooves are present on the surface of a hard chromium plating film according to the present invention. It is understood that due to the presence of such crack-like grooves, the chromium plating layer observed from the surface has a network of crack-like grooves. Figure 3 contains 7 optical micrographs (magnification: 100 times), and the presence of crack-like grooves shown in the micrographs is most preferred. This is quantitatively described as follows.

In the composite chromium plating film of the present invention, it is preferable that the crack-like grooves have a groove width of 0.5 µm to 10 µm. A crack-like groove having a groove width of less than 0.5 µm is not preferred because even if irregular hard particle are used, filling properties for a crack-like groove which has a substantially V-shaped cross section with hard particles are deteriorated. A crack-like groove having a groove width of more than 10 µm is not preferred because the groove width is excessively greater relative to the particle size of the hard particles used in the present invention to cause a decrease in fixing rates of filled hard particles and thus a good composite chromium plating film cannot be obtained.

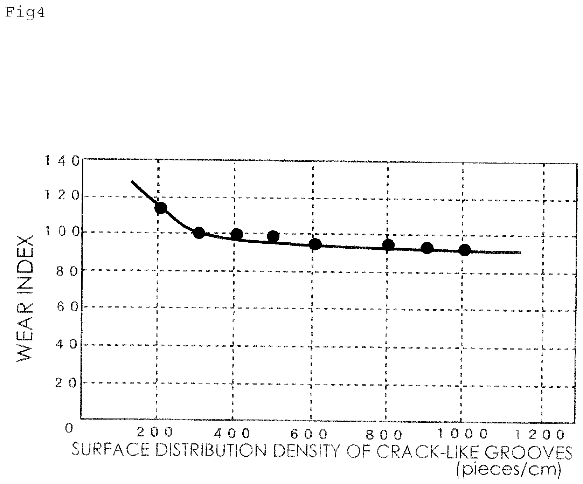

In the composite chromium plating film of the present invention, it is preferable that the crack-like grooves have a surface distribution density of 250 pieces/cm to 1000 pieces/cm. The relation between a "wear index" and a "surface distribution density of crack-like grooves" shown in Figure 4 shows that when the crack-like grooves have a surface distribution density of 250 pieces/cm or more, the wear index begins to saturate and is substantially fixed at 1000 pieces/cm or more. In other words, a surface distribution density of crack-like grooves of less than 250 pieces/cm is not preferred because an adequate amount of irregular hard particles cannot be filled and the effect of improving wear resistance expected for the hard particles is decreased. On the other hand, a surface distribution density of crack-like grooves of more than 1000 pieces/cm is not preferred because the surface distribution density of crack-like grooves is excessive and the hard chromium plating formed on a sliding surface has reduced strength and is easily peeled off at the time of sliding and neither is the wear resistance improved. Thus in consideration of the balance between ensuring the most stable wear resistance and the production cost, the crack-like grooves have a surface distribution density of more preferably 300 pieces/cm to 800 pieces/cm.

In the composite chromium plating film of the present invention, the crack-like grooves have an area occupancy rate on a surface of 3% by area to 30% by area. Only when the above definitions of the "crack-like grooves" and the "surface distribution density of the crack-like grooves" are met, the crack-like grooves have an area occupancy rate on the surface of hard chromium plating in the range as described herein.

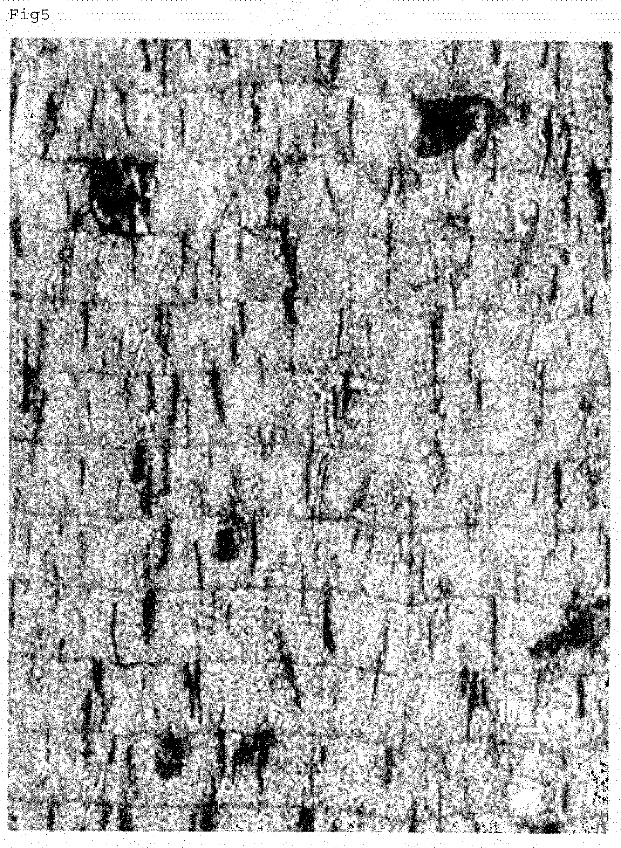

Cross-section of hard chromium plating film: The hard chromium plating layer constituting the composite chromium plating film of the present invention is composed of two or more stacked hard chromium plating layers as shown in Figure 5. Figure 5 shows an optical micrograph of a cross-section of hard chromium plating layers observed at a magnification of 400 times. It can be understood that crack-like grooves are formed in all of the layered hard chromium plating layers because the production method described later was employed.

Preferably each hard chromium plating layer has a thickness of 8 µm to 50 µm. A hard chromium plating layer having a thickness of less than 8 µm fails to provide stable durability performance in sliding movement. On the other hand, although there is no special problem even if the hard chromium plating layer has a thickness of more than 50 µm, the thickness is not preferred because the durability performance of the sliding surface is saturated, resulting in the waste of resources and the like.

### <Embodiments of sliding member of the present invention>

The sliding member of the present invention is composed of a base member used for a sliding member and the above-described composite chromium plating film is formed on the sliding surface. The base member is not particularly limited and a wide range of sliding members may be produced. However, a piston ring for an internal-combustion engine provided with a composite chromium plating film on the sliding surface is particularly preferred.

In the case where the sliding member is a piston ring, a cast material or steel may be used as the base member. For producing a piston ring for a marine internal-combustion engine that requires stability for long term use, a cast material with the following composition is preferably used. The following alloy elements are optional and added depending on the required quality. One or more elements may be used in combination.

### [Composition of base member of piston ring for marine internal-combustion engine]

• Main component (unit: % by mass)

| | |
|---|---|
| carbon: | 2.7 to 4.0 |
| silicon: | 1.1 to 3.0 |
| manganese: | 0.5 to 1.0 |
| phosphorus: | 0.05 to 0.5 |
| sulfur: | 0.12 or less |

• Alloy component added as needed (unit: % by mass)

| | |
|---|---|
| nickel: | 0.2 to 1.0 |
| chromium: | 0.1 to 1.0 |
| molybdenum: | 0.4 to 1.5 |
| copper: | 0.2 to 1.1 |
| boron: | 0.01 to 0.6 |
| titanium: | 0.15 or less |
| vanadium: | 0.25 or less |

### <Method of forming composite chromium plating film>

The composite chromium plating film according to the present invention is formed by the following procedure. When a base member of a sliding member is used as a material to be plated in the procedure, a sliding member of the present invention can be obtained.

### 1. Pretreatment step

The pretreatment step is not essential and optionally carried out as needed. Specifically, when it is necessary to clean the surface of a material to be plated on which a composite chromium plating film is formed, the target is subjected to pretreatment such as degreasing, washing and honing as necessary. For the method of cleaning, any physical cleaning method such as acid washing, alkaline washing, organic solvent washing and blasting may be employed.2.

### Electropolishing step

In this step, the material to be plated is electropolished in a chromium plating bath. For the condition of electropolishing, preferably electropolishing is carried out in the condition of a temperature of a hard chromium plating solution in a chromium plating bath of 45°C to 75°C, setting the material to be plated as the anode and the counter electrode as the cathode, a current density of 20 A/dm² to 100 A/dm² and an electrolysis time of 10 seconds to 120 seconds.

### 3. Step of forming composite chromium plating layer

In the composite chromium plating layer, n (an integer of 3 ≤ n) hard chromium plating layers are stacked.

Formation of first hard chromium plating layer: After completion of electropolishing, the state of polarization for the material to be plated and the counter electrode is reversed in this hard chromium plating step. More specifically, in this step, a hard chromium plating layer is formed on the surface of the material to be plated in the condition of a temperature of a hard chromium plating solution in a chromium plating bath of 45°C to 75°C, setting the material to be plated as the cathode and the counter electrode as the anode, a current density of 30 A/dm² to 100 A/dm² and an electrolysis time of 10 minutes to 200 minutes.

For the hard chromium plating solution used in this step and later, the composition of the plating bath is not particularly limited as long as hard chromium plating can be carried out. However, in consideration of the stability of plating solution and the stability of interlayer adhesion of hard chromium plating layers described later, a fluoride chromium plating bath or a Sargent bath is preferably used. For example, a fluoride chromium plating bath with a Cr0₃ concentration of 200 g/l to 250 g/l, a H₂SO₄ concentration of 1.0 g/l to 1.5 g/l and a H₂SiF₆ concentration of 2 g/l to 5 g/l was used. And irregular alumina particles are suspended in the fluoride chromium plating bath in the range of 20 g/l to 40 g/l as hard particles.

Step of forming crack-like groove in the first hard chromium plating layer: After forming a hard chromium plating layer in the above hard chromium plating step, the state of polarization is changed to set the material to be plated as the anode and the counter electrode as the cathode at a changing time of 1 second or less so that the crack-like grooves do not reach the surface of the material to be plated. In the condition of a current density of 30 A/dm² to 120 A/dm² and an electrolysis time of 30 seconds to 60 seconds, part of the resulting hard chromium plating layer is eluted to form crack-like grooves.

At this stage the hard chromium plating solution containing irregular alumina particles is injected at an injection pressure of 60 L/min to 200 L/min to make irregular alumina particles collide with the plated surface where crack-like grooves have been formed, thereby introducing the irregular alumina particles into the crack-like grooves. The same applies to the formation of crack-like grooves in the second to n th hard chromium plating layers.

Formation of the second to (n - 1) th hard chromium plating layers: For forming the second to (n - 1) th hard chromium plating layers which constitute intermediate layers in the multilayer structure, the following conditions are preferably employed. More specifically, it is preferable that after completion of the formation of the lowest first hard chromium plating layer located on the surface of the material to be plated, the polarities are reversed again to set the material to be plated as the cathode and the counter electrode as the anode, and in the condition of a current density of 30 A/dm² to 100 A/dm² and an electrolysis time of 10 minutes to 100 minutes, the second to (n - 1) th hard chromium plating layers having a thickness of 5.0 µm to 30.0 µm are formed.

Formation of crack-like grooves in the second to (n - 1) th hard chromium plating layers: After forming the second to (n - 1) th hard chromium plating layers which constitute intermediate layers in the multilayer structure, the state of polarization is changed to set the material to be plated as the anode and the counter electrode as the cathode at a changing time of 1 second so that shallow crack-like grooves that remain in a hard chromium plating layer and deep crack-like grooves that reach a hard chromium plating layer located thereunder are mixed. In the condition of a current density of 30 A/dm² to 120 A/dm² and an electrolysis time of 30 seconds to 60 seconds, part of the resulting hard chromium plating layer is eluted to form crack-like grooves.

To avoid misunderstanding, the step of forming the second to (n - 1) th hard chromium plating layers will be additionally described. We clearly note that in these steps [formation of a hard chromium plating layer] → [formation of crack-like grooves in the hard chromium plating layer] is a unit process and the unit process is repeated until the hard chromium plating layer reaches a predetermined thickness, thereby forming the stacked second to (n - 1) th hard chromium plating layers. As a result the hard chromium plating layers constituting the composite chromium plating film are layered as shown in Figure 5, and crack-like grooves can be found in the respective hard chromium plating layers.

Formation of n th hard chromium plating layer: It is preferable that as the n th hard chromium plating layer to be located at the outermost surface, a hard chromium plating layer having the largest thickness of 8 µm to 50 µm among the intermediate second to (n - 1) th hard chromium plating layers is formed. It is preferable that the n th hard chromium plating layer is formed in the condition of setting the material to be plated as the cathode and the counter electrode as the anode, a current density of 30 A/dm² to 100 A/dm² and an electrolysis time of 15 minutes to 100 minutes.

Formation of crack-like grooves in the n th hard chromium plating layer: After completion of the formation of the n th hard chromium plating layer, crack-like grooves are formed by the same method as that used for the formation of crack-like grooves in the second to (n-1) th hard chromium plating layers.

### 4. After-baking step

It is also preferable that after completion of the formation of a hard chromium plating film composed of the first to n th hard chromium plating layers, the hard chromium plating film is subjected to baking in a predetermined condition for arranging the shape of the crack-like grooves as needed. In the baking, the atmosphere for heating is not particularly limited, and preferably the heating is carried out at a temperature of 180°C to 220°C for 2 to 5 hours. The after-baking makes the width of the crack-like grooves uniform and this reduces the variation in the oil retention ability within the crack-like grooves.

### 5. Finishing step

The finishing step is not essential but optional. Specifically, this step is for the finishing of the surface properties of the n th hard chromium plating layer located at the outermost layer of the hard chromium plating film by processing such as polishing or grinding depending on the required quality of the product. The processing means here is not particularly limited and a known appropriate method may be selected and used.

So far the method of forming the composite chromium plating film according to the present invention has been described. Hereinafter the composite chromium plating film of the present invention will be described in more detail with reference to Example and Comparative Example.

### [Example]

### A. Production of sliding member

In this Example, a composite chromium plating film was formed on a base sliding member (equivalent to a cast iron piston ring base member) as follows. The steps will be described sequentially below.

### 1. Pretreatment step

In the pretreatment step, first a base sliding member having a composition shown in the following Table 1 was subjected to degreasing with vapor of "NS Clean", trade name, manufactured by JX Nippon Oil & Energy Corporation. Subsequently, a suspension containing ceramic hard particles were injected to the surface of the base sliding member at a water pressure of 5 kg/mm² and the surface of the base sliding member was subjected to wet blasting to form a translucent surface.

**Table 1**

| Composition of base sliding member/wt% | |
|---|---|
| Carbon | 2.95 |
| Silicon | 1.35 |
| Manganese | 0.80 |
| Phosphorus | 0.20 |
| Sulfur | 0.05 |
| Nickel | 0.50 |
| Chromium | 0.18 |
| Molybdenum | 0.50 |
| Remainder | Iron and unavoidable impurities |

### 2. Electropolishing step

In this step the material to be plated after the pretreatment was electropolished in the condition of a temperature of a hard chromium plating solution of 50°C, setting the base sliding member as the anode and the counter electrode as the cathode in a chromium plating bath, a current density of 60 A/dm² and an electrolysis time of 10 seconds. For the hard chromium plating solution, a fluoride chromium plating bath with a CrO₃ concentration of 250 g/l, a H₂SO₄ concentration of 1.0 g/l and a H₂SiF₆ concentration of 5.0 g/l was used. The same hard chromium plating solution was used in the following steps.

### 3. Step of forming composite chromium plating layer

The composite chromium plating layer formed in this Example is composed of 25 stacked hard chromium plating layers.

Formation of first hard chromium plating layer: After completion of electropolishing, the state of polarization for the base sliding material and the counter electrode in electropolishing is reversed. More specifically, in this step, a hard chromium plating layer having a thickness of 40 µm was formed on the surface of the base sliding member in the condition of a temperature of a hard chromium plating solution in a chromium plating bath of 50°C, setting the base sliding member as the cathode and the counter electrode as the anode, a current density of 70 A/dm² and an electrolysis time of 50 minutes.

Step of forming crack-like groove in the first hard chromium plating layer: After forming a hard chromium plating layer in the above hard chromium plating step, the state of polarization is changed to set the base sliding member as the anode and the counter electrode as the cathode at a changing time of 1 second or less so that the crack-like grooves do not reach the surface of the base sliding member. In the condition of a current density of 120 A/dm² and an electrolysis time of 40 seconds, part of the resulting first hard chromium plating layer was eluted to form crack-like grooves.

Since 30 g/l of irregular alumina particles had been added to the fluoride chromium plating bath to form slurry, at this stage powder of irregular alumina particles were filled in the crack-like grooves formed by the partial elution of the first hard chromium plating layer with a high pressure water stream of 150 L/min to 180 L/min. The powder characteristics of the irregular alumina powder are as follows.

Average circularity: 0.83
Average equivalent circle diameter: 3.8 µm
Aspect ratio: 1.45
Average particle size D₅₀: 1.4 µm

After completion of the formation of the crack-like grooves in the first hard chromium plating layer, a unit process of [formation of a hard chromium plating layer] → [formation of crack-like grooves in the hard chromium plating layer] is repeated to form the stacked second to 24th hard chromium plating layers as described below.

Formation of second to 24th hard chromium plating layers: For forming the second to 24th hard chromium plating layers which constitute intermediate layers in the multilayer structure, the following conditions were employed. More specifically, after completion of the formation of the lowest first hard chromium plating layer located on the surface of the material to be plated, polarities are reversed again to set the base sliding member as the cathode and the counter electrode as the anode, and in the condition of a current density of 70 A/dm² to 120 A/dm² and an electrolysis time of 28 minutes, the second to 24th hard chromium plating layers having a thickness of 15 µm were formed.

Formation of crack-like grooves in the second to 24th hard chromium plating layers: After forming the second to 24th hard chromium plating layers which constitute intermediate layers in the multilayer structure, the state of polarization was changed to set the base sliding member as the anode and the counter electrode as the cathode at a changing time of 1 second so that shallow cracks that remained in a hard chromium plating layer and deep crack-like grooves that reached a hard chromium plating layer located thereunder were mixed. In the condition of a current density of 120 A/dm² and an electrolysis time of 40 seconds, part of the resulting hard chromium plating layer was eluted to form crack-like grooves. And powder of irregular alumina particles were filled in the crack-like grooves with a high pressure water stream of 150 L/min to 180 L/min based on the same theory as described above.

Formation of 25th hard chromium plating layer: The 25th hard chromium plating layer to be located at the outermost surface had a thickness of 20 µm, which is thicker than the second to 24th hard chromium plating layers having a thickness of 15 µm. The 25th hard chromium plating layer was formed in the condition of setting the material to be plated as the cathode and the counter electrode as the anode, a current density of a A/dm² and an electrolysis time of 40 minutes.

Formation of crack-like grooves in the 25th hard chromium plating layer: After completion of the formation of the 25th hard chromium plating layer, crack-like grooves were formed by the same method as that used for the formation of crack-like grooves in the second to 24th hard chromium plating layer. By the steps above, a sliding member (equivalent to a cast iron piston ring) having a composite chromium plating film on the sliding surface was substantially obtained.

### 4. After-baking step

The sliding member (equivalent to a cast iron piston ring) having a composite chromium plating film composed of the first to 25th hard chromium plating layers was heated in air atmosphere in the condition of 200°C × 2 hours for the purpose of arranging the shape of the crack-like grooves and improving the subsequent finishing processability.

### 5. Finishing step

After completion of the after-baking step, the surface of the composite chromium plating film on the sliding surface of the sliding member (equivalent to a cast iron piston ring) was finished by grinding to be suitable for sliding on the surface of a cylinder liner of an internal-combustion engine. The crack-like grooves had a groove width of 5 µm, a surface distribution density of 580 pieces/cm and an area occupancy rate on the surface of 23% by area.

### B. Evaluation of sliding performance of sliding member

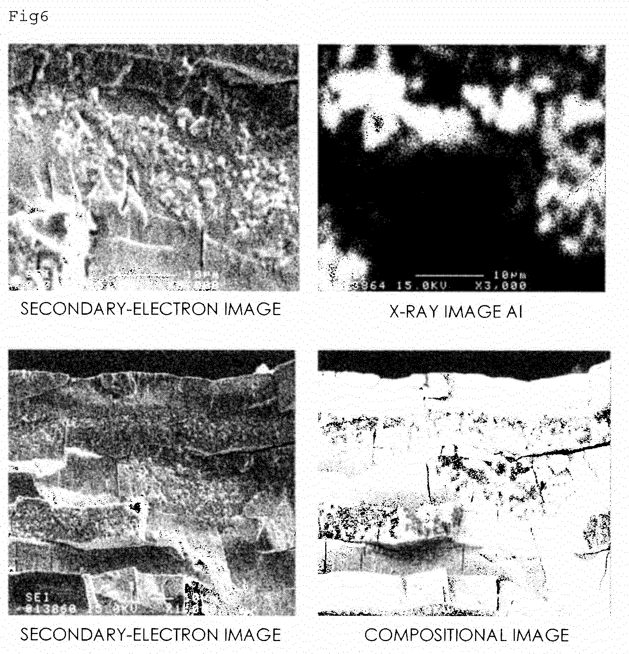

Observation of state of filling of alumina particles in crack-like groove: Figure 6 is scanning electron micrographs showing the state of irregular alumina particles present in crack-like grooves of the composite chromium plating layer prepared in this Example. As can be seen from Figure 6 it is clearly recognized that irregular alumina particles having a fine primary particle size are successfully filled in the crack-like grooves at high density.

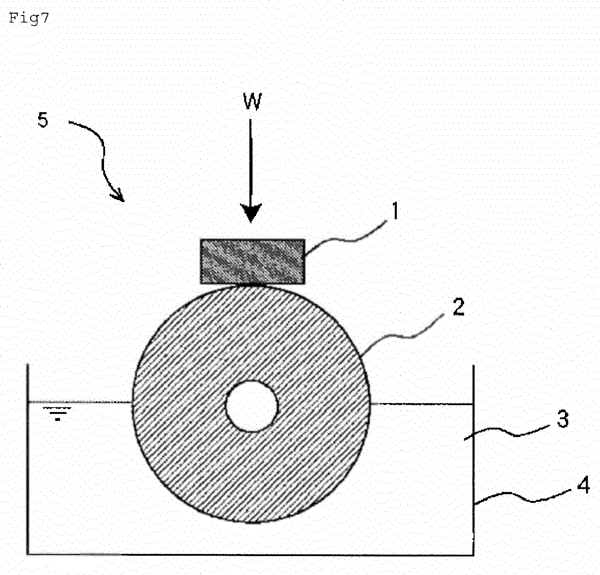

Wear test evaluation: The wear resistance of the sliding member (equivalent to a cast iron piston ring) was evaluated by using a wear tester shown in Figure 7. For the wear index described above, in an Amsler wear tester 5 as shown in Figure 7, a cuboid test piece 1 (dimension: 7 mm × 8 mm × 5 mm) cut from the sliding member (equivalent to a cast iron piston ring with composite chromium plating) was fixed and brought into contact with a doughnut-shaped mating material 2 having an outer diameter of 40 mm, an inner diameter of 16 mm and a thickness of 10 mm which corresponds to a cylinder liner, and with applying load W to the test piece 1, the test was carried out in the following test condition. The lower half of the mating material 2 was immersed in lubricating oil 3 in a test bath 4. The wear amount (µm) was determined based on the irregularity profile obtained by a roughness meter.

### [Experimental condition of wear test]

Load: 784 N
Peripheral speed: 1.0 m/s (478 rpm)
Oil temperature: 80°C
Lubricating oil: CLISEF H8
Test time: 7 hours
Mating material (equivalent to a liner material): FC25

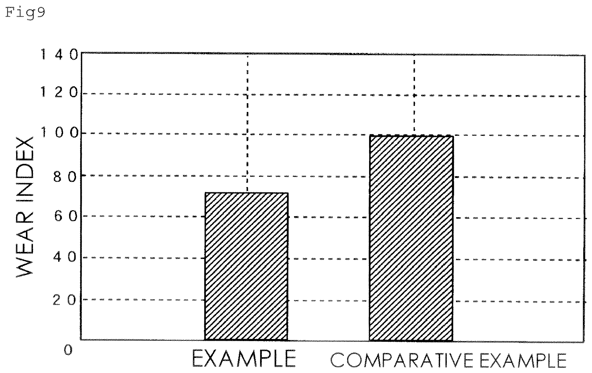

The results of evaluation of the wear resistance are shown in Figure 9 for comparison with Comparative Example. Figure 9 shows characteristics of the sample of Example with the wear index expressed in a value relative to the wear amount of the sample of Comparative Example as 100. The smaller the wear index, the better the wear resistance.

### [Comparative Example]

### A. Production of sliding member

Comparative Example is different from Example only in that spherical alumina particles having the following powder characteristics were used instead of the irregular alumina particles used in Example. Therefore only the powder characteristics of the spherical alumina particles will be described without overlaps.

Average circularity: 0.86
Average equivalent circle diameter: 6.3 µm
Aspect ratio: 1.16
Average particle size D₅₀: 6.5 µm

### B. Evaluation result of sliding performance of sliding member

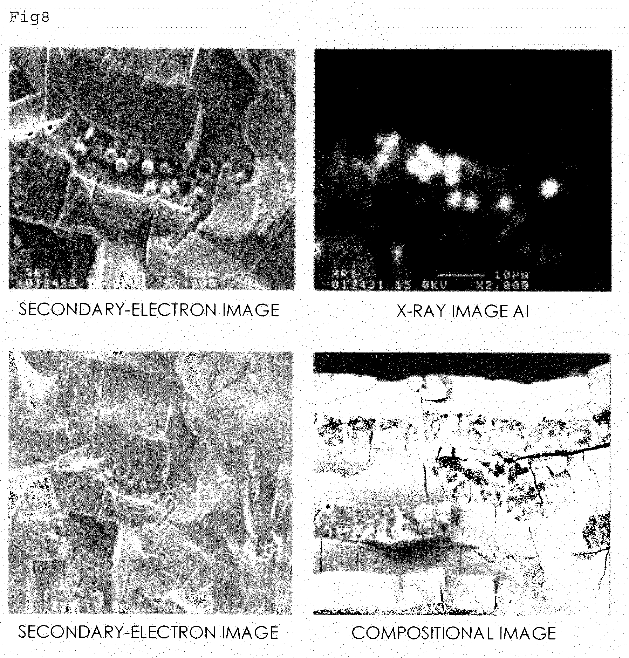

Observation of state of filling of alumina particles in crack-like groove: Figure 8 is scanning electron micrographs showing the state of spherical alumina particles present in crack-like grooves of the composite chromium plating layer prepared in this Comparative Example. Compared with the state of filling of Example shown in Figure 6, it is easily understood that the number of particles filled in the crack-like grooves is smaller.

### Wear test evaluation:

The results of evaluation of the wear resistance are shown in Figure 9 for comparison with Example. In Figure 9, the wear amount of the sample of Comparative Example in the wear test is represented as 100.

### [Comparison between Example and Comparative Example]

Observation of state of filling of alumina particles in crack-like groove: From the comparison between the state of filling of the alumina particles in Example shown in Figure 6 and the state of filling of the alumina particles in Comparative Example shown in Figure 8, it can be clearly recognized that alumina particles are successfully filled in the crack-like grooves are successfully at higher density in Example compared to Comparative Example. Also, as can be seen from Figure 8, although alumina particles having a substantially spherical primary particle shape are present in crack-like grooves, the alumina particles already came off the crack-like grooves when a fracture surface of the crack-like grooves was formed. On the other hand, in Example, filling was successful at high density and no irregular alumina particle came off the crack-like grooves, which shows that a good filling state was maintained.

Wear test evaluation: When the wear amount of the sample of Comparative Example was defined as 100 as the standard value, the wear index of Example was 73. This clearly shows that the wear resistance of Example is higher than the wear resistance of Comparative Example.

### [Industrial Applicability]

Since irregular hard particles are used in the composite chromium plating film of the present invention, the filling state of crack-like grooves in hard chromium plating with hard particles can be remarkably improved. As a result, when the composite chromium plating film is provided on the sliding surface of a piston ring for an internal-combustion engine or the like, a high quality internal-combustion engine without deterioration of driving performance even for long term use can be provided.

### [Reference Signs List]

- 1: Test piece
- 2: Mating material
- 3: Lubricating oil
- 4: Test bath
- 5: Amsler wear tester
- W: Load

## Claims

1. A composite chromium plating film comprising a hard chromium plating film having crack-like grooves filled with hard particles, wherein the hard particles are selected from alumina particles, silicon carbide particles, silicon nitride particles and diamond particles with an irregular particle shape and an average equivalent circle diameter of 6.0 µm or less, or a mixture thereof, charactherized in that
the hard particles have powder characteristics of an average circularity of 0.70 to 0.85, and an aspect ratio of 1.3 or more,
wherein the powder characteristics are determined by using a particle shape image analyzer PITA-1 made by SEISHIN ENTERPRISE Co., Ltd. as follows:
- dispersing 0.1 g of hard particles in silicone oil as the dispersion medium under the conditions of a carrier fluid 1 flow rate of 10 µl/sec, a carrier fluid 2 flow rate of 10 µl/sec and a sample fluid flow rate of 0.08 µl/sec,
- allowing the fluids to pass through a cell,
- carrying out binarization with the first binarization threshold for determining particles to be taken being 80 and the first binarization threshold for determining the outline of particles that have been taken being 200,
- taking projections of 3000 dispersed hard particles by a monochrome CCD camera provided with a 10 power objective lens, and
- calculating the values based on the 3000 projections taken as follows:
• Circularity = circumference of a circle having the same area as that of a particle in a projection / circumference of a particle in a projection
• Average circularity: an average of circularity of 3000 particles
• Equivalent circle diameter: diameter of a circle having the same area as that of a particle in a projection
• Average equivalent circle diameter: an average of equivalent circle diameters of 3000 particles
• Aspect ratio = maximum length / maximum vertical length.

2. The composite chromium plating film according to claim 1, wherein the hard particles have an average particle size D₅₀ in laser diffraction/scattering particle size distribution measurement of 0.8 µm to 2.0 µm.

3. The composite chromium plating film according to claim 1 or 2, wherein the crack-like grooves have a groove width of 0.5 µm to 10 µm.

4. The composite chromium plating film according to any one of claims 1 to 3, wherein the crack-like grooves have a surface distribution density of 250 pieces/cm to 1000 pieces/cm.

5. The composite chromium plating film according to any one of claims 1 to 4, wherein the crack-like grooves have an area occupancy ratio on a surface of 3% by area to 30% by area.

6. The composite chromium plating film according to any one of claims 1 to 5, comprising two or more layered hard chromium plating layers.

7. A sliding member comprising a composite chromium plating film according to any one of claims 1 to 6 provided on the sliding surface of the member.

8. The sliding member according to claim 7, wherein the sliding member is a piston ring for an internal-combustion engine.

## Patentansprüche

1. Verbundverchromungsschicht umfassend eine Hartverchromungsschicht mit rissartigen Nuten, die mit harten Partikeln gefüllt sind, wobei die harten Partikel ausgewählt sind aus Aluminiumoxidpartikel, Siliciumkarbidpartikeln, Siliciumnitridpartikeln und Diamantpartikeln mit einer unregelmäßigen Partikelform und einem durchschnittlichen äquivalenten Kreisdurchmesser von 6,0 µm oder weniger oder eine Mischung davon, **dadurch gekennzeichnet, dass**
die harten Partikel Pulvereigenschaften mit einer durchschnittlichen Kreisförmigkeit von 0,70 bis 0,85 und einem Seitenverhältnis von 1,3 oder mehr aufweisen,
wobei die Pulvereigenschaften unter Verwendung eines Partikelform-Bildanalysators PITA-1 hergestellt von SEISHIN ENTERPRISE Co., Ltd., wie folgt bestimmt werden:
- Dispergieren von 0,1 g harten Partikeln in Silikonöl als Dispersionsmedium unter den Bedingungen einer Trägerfluid 1-Durchflussrate von 10 µl/sec, einer Trägerfluid 2-Durchflussrate von 10 µl/sec und einer Probenfluid-Durchflussrate von 0,08 µl/sec,
- Zulassen, dass die Fluids durch eine Zelle passieren,
- Durchführen einer Binarisierung mit dem ersten Binarisierungsschwellenwert zum Bestimmen der zu entnehmenden Partikel von 80 und dem ersten Binarisierungsschwellenwert zum Bestimmen der Kontur der aufgenommenen Partikel von 200,
- Aufnehmen von Projektionen von 3000 dispergierten harten Partikeln mit einer monochromen CCD-Kamera, die mit einer 10-fachen Objektivlinse ausgestattet ist, und
- Berechnen der Werte auf der Basis von 3000 aufgenommenen Projektionen, wie folgt:
• Kreisförmigkeit = Umfang eines Kreises mit der gleichen Fläche wie die eines Partikels in einer Projektion / Umfang eines Partikels in einer Projektion
• durchschnittliche Kreisförmigkeit: ein Durchschnitt der Kreisförmigkeit von 3000 Partikeln
• äquivalenter Kreisdurchmesser: Durchmesser eines Kreises mit der gleichen Fläche wie die eines Partikels in einer Projektion
• durchschnittlicher äquivalenter Kreisdurchmesser: durchschnittlicher äquivalenter Kreisdurchmesser von 3000 Partikeln
• Seitenverhältnis = maximale Länge / maximale vertikale Länge.

2. Verbundverchromungsschicht nach Anspruch 1, wobei die harten Partikel eine durchschnittliche Partikelgröße D₅₀ bei der Laserbeugungs/Streuungs-Teilchengrößenverteilungsmessung von 0,8 µm bis 2,0 µm aufweisen.

3. Verchromungsschicht nach Anspruch 1 oder 2, wobei die rissartigen Nuten eine Nutenbreite von 0,5 µm bis 10 µm aufweisen.

4. Verchromungsschicht nach einem der Ansprüche 1 bis 3, wobei die rissartigen Nuten eine Oberflächenverteilungsdichte von 250 Stücke/cm bis 1000 Stücke/cm aufweisen.

5. Verchromungsschicht nach einem der Ansprüche 1 bis 4, wobei die rissartigen Nuten ein Flächenbelegungsverhältnis auf einer Oberfläche von 3 Flächen-% bis 30 Flächen-% aufweisen.

6. Verchromungsschicht nach einem der Ansprüche 1 bis 5, umfassend zwei oder mehr geschichtete Hartverchromungsschichten.

7. Gleitelement, umfassend eine Verbungverchromungsschicht nach einem der Ansprüche 1-6, bereitgestellt auf einer Gleitfläche des Elements.

8. Gleitelement nach Anspruch 7, wobei das Gleitelement ein Kolbenring für einen Verbrennungsmotor ist.

## Revendications

1. Film de placage composite au chrome comprenant un film de placage de chrome dur ayant des rainures de type fissures remplies de particules dures, les particules dures étant choisies parmi des particules d'alumine, des particules de carbure de silicium, des particules de nitrure de silicium et des particules de diamant ayant une forme de particule irrégulière et un diamètre de cercle équivalent moyen inférieur ou égal à 6,0 µm, ou un mélange de celles-ci, **caractérisé en ce que**
les particules dures ont des caractéristiques de poudre se traduisant par une circularité moyenne 0,70 à 0,85, et un rapport d'aspect de 1,3 ou plus,
les caractéristiques de poudre étant déterminées en utilisant un analyseur d'images de formes de particules PITA-1 fabriqué par SEISHIN ENTERPRISE Co., Ltd, comme suit :
- disperser 0,1 g de particules dures dans de l'huile de silicone en tant que milieu de dispersion dans des conditions de débit de fluide porteur 1 égal à 10 µl/s, débit de fluide porteur 2 égal à 10 µl/s et débit fluidique d'échantillon égal à 0,08 µl/s,
- faire passer les fluides à travers une cellule,
- réaliser une binarisation, le premier seuil de binarisation pour déterminer les particules à prendre étant égal à 80 et le premier seuil de binarisation pour déterminer le contour des particules qui ont été prises étant égal à 200,
- prendre les projections de 3000 particules dures dispersées avec une caméra CCD monochrome munie d'un objectif de puissance 10 et
- calculer les valeurs sur la base des 3000 projections prises comme suit :
• Circularité = circonférence d'un cercle de même surface que celle d'une particule dans une projection / circonférence de la particule dans une projection
• Circularité moyenne : moyenne de la circularité de 3000 particules
• Diamètre de cercle équivalent : diamètre d'un cercle de même surface que celle d'une particule dans une projection
• Diamètre de cercle équivalent moyen : moyenne des diamètres de cercle équivalent de 3000 particules
• Rapport d'aspect = longueur maximale/longueur verticale maximale.

2. Film de placage composite au chrome selon la revendication 1, dans lequel les particules dures ont une taille moyenne de particule D₅₀ lors d'une mesure de distribution granulométrique par diffraction/diffusion laser de 0,8 µm à 2,0 µm.

3. Film de placage composite au chrome selon la revendication 1 ou 2, dans lequel les rainures de type fissures ont une largeur de rainure de 0,5 µm à 10 µm.

4. Film de placage composite au chrome selon l'une quelconque des revendications 1 à 3, dans lequel dans lequel les rainures de type fissure ont une densité de distribution surfacique de 250 unités par cm à 1000 unités par cm.

5. Film de placage composite au chrome selon l'une quelconque des revendications 1 à 4, dans lequel les rainures de type fissures ont un taux d'occupation surfacique sur une surface de 3 % en surface à 30 % en surface.

6. Film de placage composite au chrome selon l'une quelconque des revendications 1 à 5, comprenant deux couches de placage de chrome dur stratifiées ou plus.

7. Élément coulissant comprenant un film de placage composite au chrome selon l'une quelconque des revendications 1 à 6 fourni sur la surface de coulissement de l'élément.

8. Élément coulissant selon la revendication 7, l'élément coulissant étant un segment de piston pour un moteur à combustion interne.
